Europäisches Patentamt

European Patent Office

Office européen des brevets

(19)

(11) Veröffentlichungsnummer: **0 231 146**

**A1**

(12) **EUROPÄISCHE PATENTANMELDUNG**

(21) Anmeldenummer: 87810012.2

(22) Anmeldetag: 09.01.87

(51) Int. Cl.⁴: **E 04 B 1/94**
    B 32 B 15/08

(30) Priorität: 21.01.86 CH 215/86

(43) Veröffentlichungstag der Anmeldung:
    05.08.87 Patentblatt 87/32

(84) Benannte Vertragsstaaten:
    AT BE CH DE FR GB IT LI LU NL SE

(71) Anmelder: SCHWEIZERISCHE ALUMINIUM AG
    CH-3965 Chippis (CH)

(72) Erfinder: Hälg, Paul
    Geiselweidstrasse 50
    CH-8400 Winterthur (CH)

    Severus, Harald
    Ungarbühlstrasse 52
    CH-8200 Schaffhausen (CH)

(54) Schwer brennbare, raucharme Verbundplatte und Verfahren zur Herstellung derselben.

(57) Verbundplatten mit Kunststoffkern (2) aus Polyvinylchlorid und beidseitig mittels Klebstoffschichten aufgebrachten metallischen Deckschichten (3, 4) weisen auch bei Verwendung von flammhemmenden Zusätzen in der Kunststoffkernschicht für bestimmte Anwendungen bezüglich des Verhaltens unter Brandeinwirkungen nicht voll befriedigende Eigenschaften insbesondere betreffend die Rauchentwicklung auf.

Verbundplatten mit einem Kunststoffkern (2) aus nachchloriertem Polyvinylchlorid oder einem Gemisch desselben mit Polyvinylchlorid vermeiden diese Nachteile.

EP 0 231 146 A1

**Beschreibung**

Schwer brennbare, raucharme Verbundplatte und Verfahren zur Herstellung derselben.

Die Erfindung bezieht sich auf eine schwer brennbare, raucharme, bei Zimmertemperatur spanlos umformbare Verbundplatte aus einer Kernschicht aus thermoplastischem Kunststoff mit beidseitig mittels Klebstoffschichten aufgebrachten metallischen Deckschichten sowie auf ein Verfahren zur Herstellung derselben.

Bekannte Verbundplatten, welche bei Zimmertemperatur spanlos umformbar, d.h. biegbar sowie streckziehbar und/oder strecktiefziehbar sind, haben Kunststoffkernschichten aus Polyolefinen oder Polyvinylchlorid. Bei einer Kernschicht aus Polyolefinen ist das Verbundprodukt in seinem Brandverhalten nach den bekannten Bestimmungsvorschriften, z.B. nach DIN 4102, als "normal entflammbar" klassifiziert, was Einschränkungen in der Anwendung zur Folge haben kann.

Bei einer Kernschicht aus Polyvinylchlorid, insbesondere Hartpolyvinylchlorid, weist die Verbundplatte ein Brandverhalten auf, das nach DIN 4102 als "schwer entflammbar" charakterisiert ist, und damit erweiterte Anwendungsmöglichkeiten bietet.

Ein Nachteil der Kernschicht aus Hartpolyvinylchlorid liegt jedoch in der Rauchentwicklung im Brandfall. So weisen derartige Kernschichten in Form von kompaktem Hartpolyvinylchlorid Rauchindexwerte - gemessen nach ASTM E-84 - von 900-1400 und in Form von geschäumtem Hartpolyvinylchlorid mit Flammhemmerzusätzen von 500-1400 auf. Durch Rauchindexwerte der Kernschicht von mehr als 450 werden diese Verbundplatten nicht als Materialien der Brennbarkeitsklasse 1 oder A der US Building Model Codes, welche meist in Ermangelung eigenständiger nationaler Normen zur Beurteilung herangezogen werden, eingestuft.

Der vorliegenden Erfindung liegt die Aufgabe zugrunde, eine schwer brennbare, raucharme, bei Zimmertemperatur plastisch umformbare, leichte Verbundplatte der eingangs beschriebenen Art sowie ein Verfahren zur Herstellung einer solchen Verbundplatte zu schaffen, mit welcher die erwähnten Nachteile, insbesondere das ungünstige Rauchverhalten der Kernschicht im Brandfall, gekennzeichnet durch den Rauchindexwert nach ASTM E-84 von mehr als 450, vermieden werden. Somit soll die Verbundplatte die Eigenschaften leicht, steif, bei Zimmertemperatur plastisch formbar sowie schwer entflammbar (nach DIN 4102) aufweisen, wobei die Kernschicht einen Rauchdichteindex von weniger als 450 (nach ASTM E-84) aufweisen soll, sodass die Verbundplatte in die Brennbarkeitsklasse 1 oder A der oben erwähnten US-Norm eingestuft wird.

Erfindungsgemäss wird die gestellte Aufgabe durch eine Verbundplatte gelöst, welche sich nach dem Wortlaut des Anspruchs 1 auszeichnet.

Nachchloriertes Polyvinylchlorid lässt sich aber wegen der hohen Zähigkeit im schmelzflüssigen Zustand nur mit grossem verfahrenstechnischen Aufwand, der besondere, üblicherweise nicht im Handel befindliche Apparaturen notwendig macht, extrudieren und extrusionsschäumen.

Die erfindungsgemässe Weiterbildung gemäss Anspruch 2 ist daher besonders vorteilhaft.

Weitere Ausführungsformen der erfindungsgemässen Verbundplatte sind gekennzeichnet durch die Merkmale der Ansprüche 3 bis 10. Es werden somit das günstige Rauchverhalten von nachchloriertem Polyvinylchlorid und die günstigen Viskositätseigenschaften von Hartpolyvinylchlorid bei der Extrusion bzw. Schäumung zur Herstellung der Kernschicht kombiniert.

Eine geschäumte Kernschicht ist aber für die erfindungsgemässe Verbundplatte aus Gründen einer geringeren Menge brennbaren Materials pro Volumeneinheit, eines geringen Gewichtes der aufgabengemäss als leicht geforderten Verbundplatte sowie einer höheren spezifischen Steifigkeit (E.J/g) gegenüber einer kompakten Kernschicht vorteilhaft.

Bezüglich Herstellung der erfindungsgemässen Verbundplatte wid die gestellte Aufgabe durch ein Verfahren gelöst, das sich nach dem Wortlaut des Anspruchs 11 auszeichnet. Die Weiterbildung des Verfahrens zeichnet sich durch die Merkmale des Anspruchs 12 aus.

Die Herstellung der erfindungsgemässen Verbundplatte kann sowohl in einem kontinuierlichen Produktionsprozess als auch in mehreren getrennten Produktionsschritten erfolgen.

Beim kontinuierlich arbeitenden Verfahren wird vorteilhaft zuerst nachchloriertes Poly- und Hartpolyvinylchlorid als Hauptbestandteil in Mischungsverhältnissen, die einen Cl-Gehalt der Mischung von 55 bis 72 Gew.-% ergeben, unter Zusatz von für die Extrusion üblichen Stabilisatoren und Gleitmitteln sowie von flammhemmenden Füllstoffen und gegebenenfalls Treibmitteln gemischt. Als flammhemmende Füllstoffe werden bevorzugt Metalloxide wie $Sb_2O_3$; $MoO_3$; $Fe_2O_3$; $Cu_2O$; $CuO$, $NiO$, $ZnO$, $MgO$ und/oder Metallhydroxide wie $Al(OH)_3$; $2\,ZnO \cdot 3\,B_2O_3 \cdot 3.5\,H_2O$ und/oder Metallkarbonate in Mengen von 1.0-50 Gew.-% mit Korngrössen von 0.2-10 μm Durchmesser zugesetzt. Die Mischung wird in einem Extruder plastifiziert und durch ein ausformendes Werkzeug als 0.5 bis 22 mm dicke und bis zu 2000 mm breite Bahn ausgestossen.

Das spezifische Gewicht dieser thermoplastischen, kompakten oder durch die Wirkung von Treibmitteln in der Mischung geschäumten Kunststoffbahn liegt im Bereich von 0.2-1.8 $g/cm^3$. Im Falle der geschäumten Kunstsfoffbahn liegen eine Vielzahl mehr oder weniger gleichmässig verteilter Hohlräume mit Durchmessern von 2-100 μm über dem Querschnitt der Bahn vor. Die Hohlräume treten jedoch nicht an der Oberfläche der Bahn als Rauhigkeiten auf, sondern liegen in Abständen von einigen μm unter der Oberfläche, sodass die extrudierte, geschäumte Kunststoffbahn eine glatte, porenfreie Oberfläche aufweist.

In der weiteren Folge des kontinuierlichen Herstellungsverfahrens wird die extrudierte Kunststoffbahn, welche die Kernschicht der zu erzeugenden Verbundplatte darstellt, mit geeignetem thermoplastischem Klebstoff beschichtet, der vorzugsweise in Form von thermoplastischen Klebefolien in der Dicke von 10-200 µm aufgebracht wird, wobei diese anfänglich durch elektrostatische Haftkräfte auf der Kernschicht haftet.

Unter Einwirkung von Druck und Wärme wird die klebstoffbeschichtete Kernschicht in der weiteren Abfolge des kontinuierlichen Herstellungsverfahrnes mit vorgewärmten metallischen Deckschichten, insbesondere aus Aluminium, Aluminiumlegierungen oder Stahl, in Dicken von 0.1-2 mm zu einer Bahn eines - symmetrischen oder unsymmetrischen, d.h beidseitig verschiedene oder verschieden dicke metallische Deckschichten aufweisenden - Werkstoffverbundes im Sandwichaufbau verbunden.

Bei diesem auch Kaschierung genannten Vorgang des Verbindens von Deckschichten mit der Kernschicht werden die Metalldeckschichten von Bunden, die sich auf sogenannten Abhaspeln befinden, abgerollt und nach Vorwärmung mittels Abzugswalzen durch eine Kaschiervorrichtung gezogen. Die Kaschiervorrichtung besteht aus beidseitig auf die Verbundbahn einwirkenden mitlaufenden oder abrollenden, Druck ausübenden und Wärme übertragenden maschinentechnischen Bauelementen wie Walzenpaaren oder umlaufenden Raupenketten oder gestützten Stahlbändern.

Der aufgebrachte Druck und die Wärme in der Kaschiervorrichtung bewirken die Entstehung der Klebeverbindung der metallischen Deckschichten mit der Kunststoffkernschicht vermittels der vorher genannten Klebeschichten bzw. Klebefolien.

Nachdem die Verbundbahn die zur Abkühlung von der Kaschiertemperatur nötige Abkühlstrecke durchlaufen hat, schneidet eine mitlaufende Säge oder Querteilanlage, welche nach dem letzten Abzugswalzenpaar angeordnet ist, die Verbundbahn in einzelne Verbundplatten.

Bei der Herstellung der erfindungsgemässen Verbundplatten in mehreren getrennten Produktionsschritten besteht eine Ausführungsform darin, dass die extrudierte thermoplastische Kunststoffkernschicht im Bund aufgewickelt wird. Dieser Bund wird dann vor einer Kaschieranlage, welche der beim kontinuierlichen Verfahren beschriebenen Anlage entspricht, auf einer Abhalspelvorrichtung installiert und unter beidseitiger Aufbringung von Klebstoffen oder Klebefolien ablaufen gelassen und in der bei der vorherigen Beschreibung des kontinuierlichen Verfahrens geschilderten Art beidseitig mit vorgewärmten metallischen Deckschichten fest verbunden. Die entstandene Verbundbahn wird schliesslich quergeteilt zu Verbundplatten.

Bei einer anderen Ausführungsform der Herstellung der erfindungsgemässen Verbundplatten in getrennten Produktionsschritten wird die extrudierte thermoplastische Kernschicht in Platten aufgeteilt und diese Platten werden dann auf einer Kaschiervorrichtung mittels Klebstoffschichten mit den metallischen Deckschichten verbunden. Die Klebstoffe können auf die metallischen Deckschichten oder auf die Kunststoffkernschicht der Verbundplatten aufgebracht werden oder als Klebefolien zwischen Kernschicht und Deckschichten vor dem Kaschiervorgang eingebracht werden. Die Kaschiervorrichtung kann eine die Materialien im Durchlauf unter Einwirkung von Druck und Wärme miteinander verbindende Vorrichtung mit umlaufenden temperierten Druckelementen in Form von Raupenbändern oder Stahlbändern sein oder auch eine Presse mit beheizten Pressplatten.

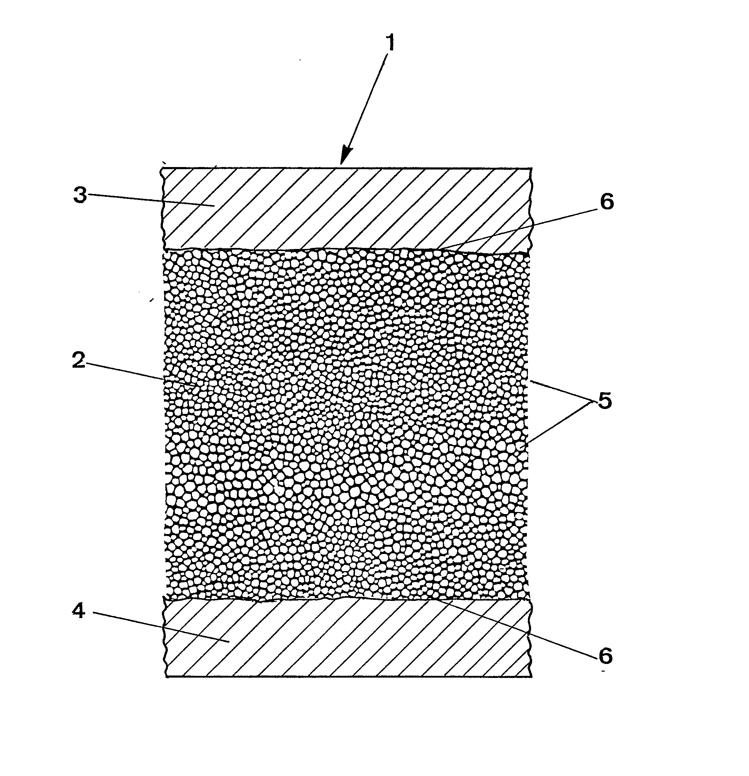

Eine vorteilhafte Ausführungsform der erfindungsgemässen Verbundplatte ist schematisch in der Zeichnung dargestellt. Diese zeigt im Querschnitt eine Verbundplatte 1 mit einer geschäumten Kernschicht 2 mit homogen verteilten Gasblasen 5 und mit beidseitig der Kernschicht angeordneten metallischen Deckschichten 3 und 4, welche mit Hilfe einer Klebstoffschicht 6 mit der Kernschicht 2 verbunden sind. Die verhältnismässig dünne Klebstoffschicht ist hier nicht ersichtlich.

Die Kernschicht 2 der Verbundplatte 1 besteht aus einem Gemisch von Hartpolyvinylchlorid und nachchloriertem Polyvinylchlorid, dem rauch- und brandvermindernde anorganische Füllstoffe zugesetzt werden. Die Gasblasen 5 werden mit einem dem Polyvinylchloridgemisch zugesetzten Treibmittel erzeugt. Wie aus der Zeichnung ersichtlich sind die Gasblasen 5 stets unter der Oberfläche der Kernschicht 2, erzeugen somit keine Vertiefungen an der Oberfläche derselben.

## Patentansprüche

1. Raucharme, schwerbrennbare, bei Zimmertemperatur spanlos umformbare Verbundplatte aus einer thermoplastischen Kernschicht und metallischen Deckschichten, welche mittels Klebstoffschichten miteinander verbunden sind,

dadurch gekennzeichnet,

dass die Kernschicht (2) aus anorganischen Füllstoff enthaltendem, nachchloriertem Polyvinylchlorid besteht und die zwischen der Kernschicht (2) und der Deckschicht (3) befindliche Klebstoffschicht (6) aus zwei aneinanderhaftenden Schichten besteht.

2. Raucharme, schwerbrennare, bei Zimmertemperatur spanlos umformbare Verbundplatte aus einer thermoplastischen Kernschicht und metallischen Deckschichten, welche mittels Klebstoffschichten miteinander verbunden sind,

dadurch gekennzeichnet,

dass die Kernschicht (2) aus einem anorganischen Füllstoff enthaltendem Gemisch von Hartpolyvinylchlorid und nachchloriertem Polyvinylchlorid besteht und die zwischen der Kernschicht (2) und der Deckschicht (3) befindliche Klebstoffschicht (6) aus zwei aneinanderhaftenden Schichten besteht.

3. Verbundplatte nach Anspruch 1 oder 2, dadurch gekennzeichnet, dass die Kernschicht (2) geschäumt ist und die in der Kernschicht (2) fein verteilten Gasblasen (5) sich unter der Oberfläche der Kernschicht befinden.

4. Verbundplatte nach Anspruch 1 oder 2, dadurch gekennzeichnet, dass die metallische Deckschicht (3) vorzugsweise aus Aluminium, einer Aluminiumlegierung und/oder Stahl besteht.

5. Verbundplatte nach Anspruch 1 oder 2, dadurch gekennzeichnet, dass midestens eine Schicht der Klebstoffschicht (6) brand- und rauchhemmende Eigenschaften aufweist.

6. Verbundplatte nach einem der Ansprüche 2 bis 5, dadurch gekennzeichnet, dass der Kunststoff der Kernschicht (2) zwischen 30 und 95 %, vorzugsweise zwischen 70 und 95 % nachchloriertes Polyvinylchlorid enthält und das nachchlorierte Polyvinylchlorid einen Chlorgehalt von 63-72 %, vorzugsweise 65-69 %, aufweist.

7. Verbundplatte nach einem der Ansprüche 1 bis 6, dadurch gekennzeichnet, dass der anorganische Füllstoff aus einem pulverförmigen Metalloxid und/oder Metallhydroxyd und/oder Metallcarbonat und/oder Metallphosphat, vorzugsweise $Sb_2O_3$; $MoO_3$; $Fe_2O_3$; $Cu_2O$; $CuO$, $NiO$, $ZnO$, $MgO$, $Al(OH)3$, $CaCO_3$, $MgCO_3$, $2ZnO . 3B_2O_3 . 3,5H2O$, insbesondere in einer Partikelgrösse von 0.2 bis 10 μm, besteht und der Gehalt des anorganischen Füllstoffes in der Kernschicht (2) zwischen 1 und 50 %, vorzugsweise zwischen 3 und 10 %, beträgt.

8. Verbundplatte nach Anspruch 7, dadurch gekennzeichnet, dass die Partikel des anorganischen Füllstoffes mit 2 % Stearinsäure, bezogen auf das Gewicht des Füllstoffes, beschichtet sind.

9. Verbundplatte nach einem der Ansprüche 1 bis 8, dadurch gekennzeichnet, dass die Kernschicht (2) eine Dichte von 0.2-1.8 $g/cm^3$, vorzugsweise von 0.5-0.8 $g/cm^3$ und eine bevorzugte Dicke von 0.5 und 22 mm, die Deckschicht (3) eine Dicke von vorzugsweise 0.1-2 mm aufweist.

10. Verbundplatte nach einem der Ansprüche 1 bis 9, dadurch gekennzeichnet, dass die zur Deckschicht (3) gerichtete Schichht der Klebstoffschicht (6) aus einem thermoplastischen Material mit guter Klebkraft zur Deckschicht (3) und entsprechend die zur Kernschicht (2) gerichtete Schicht der Klebstoffschicht (6) aus einem thermoplastischen Material mit guter Klebkraft zur Kernschicht besteht und mindestens eine der Schichten der Klebstoffschicht (6) flammhemmend ausgerüstet ist, vorzugsweise mit einem Flammhemmerbatch für Thermoplaste bestehend aus halogenierten Paraffinen und Antimonoxyd.

11. Verfahren zur Herstellung einer Verbundplatte nach einem der Ansprüche 1 bis 10, gekennzeichnet durch Verfahrensschritte

- Herstellung einer kompakten oder geschäumten Kernschicht durch Extrudieren

- Auftragen der Klebstoffschicht in Form eines thermoplastischen Klebefilms auf beide Seiten der Kernschicht

- Vorwärmen der Klebstoffschicht und der Deckschicht in einem Durchlaufofen oder über geheizte Walzen.

- Verbinden sämtlicher Schichten unter Anwendung von Druck und Wärme.

12. Verfahren zur Herstellung einer Verbundplatte nach Anspruch 11, dadurch gekennzeichnet, dass bei geschäumter Kernschicht diese zur Bildung einer porenfreien Oberfläche am Ausgang es zur Extrusion notwendigen Extrusionswerkzeuges einer intensiven Kühlung und Glättung ausgesetzt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 025 412 (SCHWEIZERISCHE ALUMINIUM)<br><br>* Patentansprüche 1-5,7-9; Seite 1, Zeilen 9-24; Seite 2, Zeile 25 - Seite 7, Zeile 12 *<br><br>--- | 1,3-5, 7-9,11 ,12 | E 04 B 1/94<br>B 32 B 15/08 |
| A | US-A-3 686 067 (J.B. WILLIAMS)<br><br>* Patentansprüche 1,7-9,13,16,17; Spalte 1, Zeile 37 - Spalte 2, Zeile 40; Spalte 4, Zeile 45 - Spalte 5, Zeile 73 *<br><br>--- | 1,3,4, 7,10 | |
| A | EP-A-0 019 835 (THE DOW CHEMICAL)<br>* Patentansprüche 1,12-14; Seite 6, Zeile 15 - Seite 11, Zeile 31 *<br><br>----- | 1,4,10 | |

RECHERCHIERTE SACHGEBIETE (Int. Cl.4)

E 04 B
B 32 B

Der vorliegende Recherchenbericht wurde für alle Patentansprüche erstellt.

| Recherchenort | Abschlußdatum der Recherche | Prüfer |
|---|---|---|
| DEN HAAG | 31-03-1987 | BLASBAND I. |